# EUROPEAN PATENT SPECIFICATION

(11) **EP 0 756 248 B1**
(45) Date of publication and mention of the grant of the patent: **24.09.2003**
(21) Application number: 96111944.3
(22) Date of filing: 24.07.1996
(51) Int. Cl.: G06T 11/00

(54) **Document processor**
Dokumentenverarbeitungsvorrichtung
Dispositif de traitement de documents

(30) Priority: 25.07.1995 JP 20854495
(43) Date of publication of application: 29.01.1997
(73) Proprietor: FUJI XEROX CO., LTD., Minato-ku, Tokyo (JP)
(72) Inventor: Hayashi, Naoki, c/o Fuji Xerox Co., Ltd., Ashigarakami-gun, Kanagawa (JP)
(74) Representative: Hoffmann, Eckart, Dipl.-Ing.

(56) References cited:
- EP-A- 0 577 048
- JP-A- 62 222 294
- US-A- 5 048 109
- US-A- 5 138 465
- US-A- 5 384 863
- PATENT ABSTRACTS OF JAPAN vol. 018, no. 567 (P-1820), 28 October 1994 & JP 06 208357 A (FUJI XEROX CO LTD), 26 July 1994,
- PATENT ABSTRACTS OF JAPAN vol. 015, no. 372 (P-1254) 19 September 1991 & JP 03 147 017 A (CANON INC) 24 June 1991
- D. KNUTH "THE TEXBOOK", ADDISON WESLEY 1993, ISBN 0-201-13447-0, pp. 13-14,199-200

## Description

The present invention relates to a document processor. In particular, the document processor can draw and output a multicolor document having a multicolor image information output. The output may originate from, for example, a word processor capable of drawing a color document, color copying machine, or color printer.

As color copying machines and computer systems including color scanners and color printers become well known, a system that permits end users to easily draw and output color documents is desirable. Once it is possible to utilize such a system, a user's demand to convert previously drawn black and white documents, black and white documents obtained by a facsimile device (FAX), and the like into color documents can be simplified. Thereby documents with a higher appeal can be obtained.

Previously underlining and/or hatching have been used to emphasize a part of a black and white document. If highlighted or marked portions of a black and white document, including underlines or hatchings, are subject to color conversion, the document will be a highly conspicuous color document. Thus, there is a great demand for conversion from black and white to color with respect to highlighted portions of a black and white document.

Techniques for such color conversion have been proposed, for example, in Japanese Patent Nos. 222294/87 (JP 294) and 147017/91 (JP 017). JP 294 colors underlines in a black and white document. JP 017 colors hatched area(s) in a black and white document and also colors the hatching itself.

According to JP 294 and JP 017, a conspicuous mark is colored. However, the mark's form is left in the color document after the color conversion. Thus, the coloring of the marked portion makes a highlighted portion difficult to read.

In a color document, the change of a character color In a portion to be highlighted is more likely to effect a highly conspicuous document compared to coloring only a mark and keeping a character color unchanged. If the JP 294 technique is used, although an underlined character is colored, the character color is unchanged. Thus, a degree of highlight for the highlighted portion is low. In JP 017, a marked area or the mark itself is colored, however the character color remains the same. Thus, it is practically Impossible to change the color of characters to be highlighted.

According to known devices, a layout corresponding to a black and white document, which is highly conspicuous when drawn remains, and the mark itself In the marked area is colored. However, the character color is not changed. The colored document does not have a sufficiently highlighted portion that fully utilizes coloring. To make a portion of a very conspicuous highlighted expression in a color document, it is desirable to use a color with a high saturation and density. However, as in JP 017, if a color with a high saturation and density is used, a solid portion or hatching makes the associated character string difficult to differentiate because the associated character string remains black. In the case of a solid print, it is easier to see characters if they are left as white on a solid print base. However, this cannot be achieved by JP 017.

Thus, a problem exists in that only a mark of the marked portion can be colored during conversion of a black and white document to a color document. The marked portion of highlighted expression becomes rather difficult to read.

US-A-5 384 863 teaches that a user identifies text that is to be changed by marking that text with, for example, underlining, highlighting or a circle. The marked text is then altered by changing its shape, highlighting the text with color or making the text bold or lighter. The hand marking is removed.

US-A-5 138 465 teaches that portions of an original document are circled with a highlighter and marked with a code (such as a letter). The document is then reproduced so that the circled portions have different characteristics, such as a different color.

D. Knuth, "The TEXbook" discloses the use of a control word for specifying a typeface in an electronic document. The control word is incorporated into the source file of a document and controls how the document is displayed on a screen. The control word is usually not inserted based upon the prior detection of another control word, as recited in the claims. "The TEXbook" also discloses the use of macros to expand user defined control words into frequently occurring constructions in a particular manuscript. Specifically, these macros are often but not exclusively used to build mathematical formulas with minimal keystrokes.

The invention has been developed to solve the above problems, and an object of the invention is to provide a document processor that can convert a black and white document to a color document, so that any highlighted portion in the black and white document using a mark, such as underline or hatching, can be converted to a highlighted expression effectively utilizing the coloring.

This object is achieved with the invention which is defined by the appended claims, in particular by a document processor according to claim 1. Preferred embodiments of the invention are subject-matter of the dependent claims.

The invention will be described in detail with reference to the following drawings in which like reference numerals refer to like element and wherein:
- Fig. 1: is a schematic block diagram showing the configuration of a principal portion of a document processor;
- Fig. 2: is a flowchart showing the processing flow for conversion processing to color an electronic filing document file by a processing control section;
- Fig. 3: is a diagram explaining a data structure of a mark control term or word/color correspondence table;
- Fig. 4: is a flowchart showing a processing flowing a character color definition inserting section;
- Fig. 5: is a flowchart showing a processing flow in a mark control word substitute section;
- Fig. 6: is a schematic block diagram showing components that constitute an electronic filing document converter in a document processor according to an embodiment of the invention;
- Fig. 7: is a flowchart showing the processing flow for conversion processing to color an electronic filing document by a processing control section in an embodiment of the invention;
- Fig. 8: is a diagram explaining a data structure of a mark line type color correspondence table; and
- Fig. 9: is a diagram explaining a relation between document data in a file to be processed and the area that document data occupies on page.

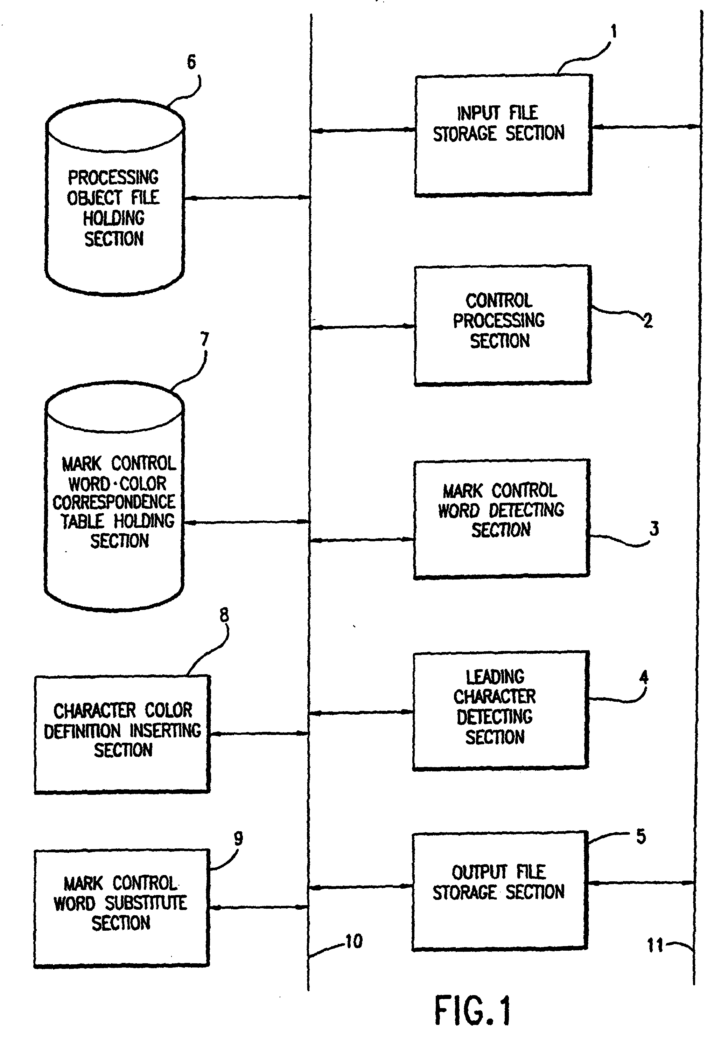

The invention, which is defined by the appended claims, will be described in detail hereunder with reference to the accompanying drawings. Fig. 1 is a schematic block diagram of the configuration of a principal portion of a document processor. In Fig. 1, the processor includes an input file storage section 1, a processing control section 2, a mark control term or word detecting section 3, a leading character detecting section 4, an output file storage section 5, a processing object file holding section 6, a mark control term or word/color correspondence table holding section 7, a character color definition inserting section 8, a mark control word substitute section 9, an internal bus 10, and an external network bus 11.

The input file storage section 1, processing control section 2, mark control word detecting section 3, leading character detecting section 4, output file storage section 5, processing object file holding section 6, mark control term or word/color correspondence table holding section 7, character color definition inserting section 8, and mark control term or word substitute section 9, are each connected with one another through the internal bus 10. They then constitute a document processing system within terminal equipment in a network system.

The following description is an operational example of a document processor, where a document processing system comprises an electronic filing document file. The document contains layout information that is read, a mark such as underline is detected, a marked character string is colored, and a colored electronic filing document file to be output. The control term or word can take any appropriate form, i.e. letters, symbols, numbers or a combination (for the ease of understanding, the control term or word will be referred to as a "control term").

Reference will now be made to a format for an electronic filing document used herein, as well as a color representation and mark representation in the electronic filing document. A format, which conforms to RTF (Rich Text Format), is used as an input/output file format in this document processing system. A file, where only a value indicative of "black" as a color character in electronic filing documents, is used as an input file of the electronic filing document file.

A description will now be provided for representations of color(s) and mark(s) in the RTF (Rich Text Format) in the document processing system. The RTF file can be located and formed of a header portion and document portion. Declarations of color, font and layout style, etc. are described in the header portion. Text contents, data regarding how to lay out character strings, a description using control words defined in the RTF specifications, and declarations described in the header portion, are described in the document portion of the RTF file.

The colors used in the document file can be designated by a declaration in a color table group. For example, this declaration can be expressed by the following text based on the BNF or Backus form:
<colortbl> '{' \colortbl <colordef>+ '}'
<colordef> \red ? & \green ? & \blue ?' ;'
The terms beginning with the back slash "\" are control terms defined by the RTF specification.

More specifically, the control term "\ colortbl" represents a declaration of the color table, while the control terms "\ red", "\ green" and "\ blue" represent color designations of the three primary colors, red, green and blue, respectively. Integer values that follow control terms "\red", "\ green" and "\ blue" indicate the degrees of the colors, respectively. The color designation range for each of the colors is an integer with a range from 0 to 255. For example, if the following control terms are described in the color table declaration:
{\ colortbl \ red0 \ green0 \ blue0; \ red255 \ green0 \blue0; \red0 \ green255 \ blue0; \ red255 \ green 255\ blue 255; },
the document file uses color designations of four colors, i.e., black ( \ redo& \ green0& \ blue0; ); red ( \ red255& \ green0& \ blue0;); blue ( \ red0& \ green0& \ blue255; ); and white ( \ red255& \ green255& \ blue255; ).

The designation of a color to be used as a character color from colors in the color table is achieved using, for example, the control term "\ cf". This term changes character formatting properties. More specifically, an integer value, which is not smaller than "0" and follows the control term "\cf", serves as an index to designate the color to be used in the color table. When the index value is "N," the (N + 1)th color in the color table is the designated color. The control of color designation is applied to the character strings by terms that follow the control term "\ cf". This term is effective until another designation appears in the next control term. Control terms that perform color designation include "Return to default value", such as "\ pard" and "\ secd".

Therefore, if a document file contains a color table declaration in its header portion, a character string description such as '... { \ cf1. The color of this sentence is red.}{ \ cfO The color of this sentence is black.} ...', designates black first and red second in the color table in the document portion of the document file. Consequently, a character string, "The color of this sentence is red.", in the first half portion of the document text becomes red, while the character string, "The color of this sentence is black.", in a half portion that follows the character string of the first half portion becomes black.

The mark representation will now be explained. Underline and hatching, like color designation, are designated by control terms. An underline is represented by control terms that change character formatting by control terms that change character formatting properties, where the control terms can indicate a start of an underline and a control term can indicate an end of the underline. The control term indicative of the start of an underline also indicates a type of underline. Thus, there are four types of control terms that can indicate a start of an underline, i.e., "\ ul (the ordinary underline)", "\ uld (dotted line)", "\ uldb (double line)", and "\ ulw (draw a line only under characters)". There are two types of control terms to indicate the end of underline, i.e., "\ ul0 (the ordinary end of underline)" and "\ ulnone (end of all underlines)".

For example, if '... { \ ul underline \ ul0 is drawn at a portion}', is in a file document, a single continuous line is drawn under the character string of only the "underline" portion.

Hatchings, which are represented as a control word for a paragraph, are broadly classified into two types, dot type and line type. The RTF specification itself defines or prepares control term for the addition of hatchings, as explained below.

A dot type hatching is represented by a control term "\ shading". Dot density can be represented by an integer value in the range from 0 to 100 that follows "\ shading". For example, the control term "\ shading20" indicates an addition of hatching with a dot density of 20% to paragraphs that follow the control term.

There are twelve types of control terms, for line type hatchings including slash and grid hatchings. The control term "\ bgbdiag" adds a backward diagonal background hatching pattern to paragraphs that follow the control term. The control term "\ bgdcross" adds a diagonal cross background hatching pattern to paragraphs that follow the control term.

Hatching designations using a control term are effective for all the paragraphs that follow the control term, until a designation of another content(s) is made by another control term. Control terms that are usable include control terms "Return to default value", such as "\ pard" and "\ secd".

A conversion processing for coloring a black and white document with mark representation alone applied to each highlighted portion into a color document, can be accomplished using an electronic filing document file converter as the document processor. The process uses control term designations, with respect to a document file of electronic filing documents for color and mark representation in the RTF specification.

A document processing system is shown in Fig. 1. A description will now be provided for processing with reference to each system component. The processing involves reading an electronic filing document file containing layout information, detecting a control term that designates a mark(s) such as underline, erasing the mark(s) from each marked character string, coloring the marked characters, and outputting the electronic filing document file as a colored document.

The document processor of Fig. 1 comprises an input file storage section 1, processing control section 2, mark control or term word detecting section 3, leading character detecting section 4, output file storage section 5, processing object file holding section 6, mark control or term word/color correspondence table holding section 7, character color definition inserting section 8, and mark control word substitute section 9. These elements are connected with one another through the internal bus 10 to constitute a document processing system in a network or network system. The document processing system performs conversion processing to convert an electronic filing document file with black and white documents into a colored file.

In conversion processing for coloring an electronic filing document file, the processing control section 2, controls other system components and reads an electronic filing document file that contains layout information. The processing control section 2 also detects a control term indicating the addition of a highlight representation mark, such as underline in a black and white document, erases the mark itself, colors characters of the marked character string, and outputs a colored electronic filing document file.

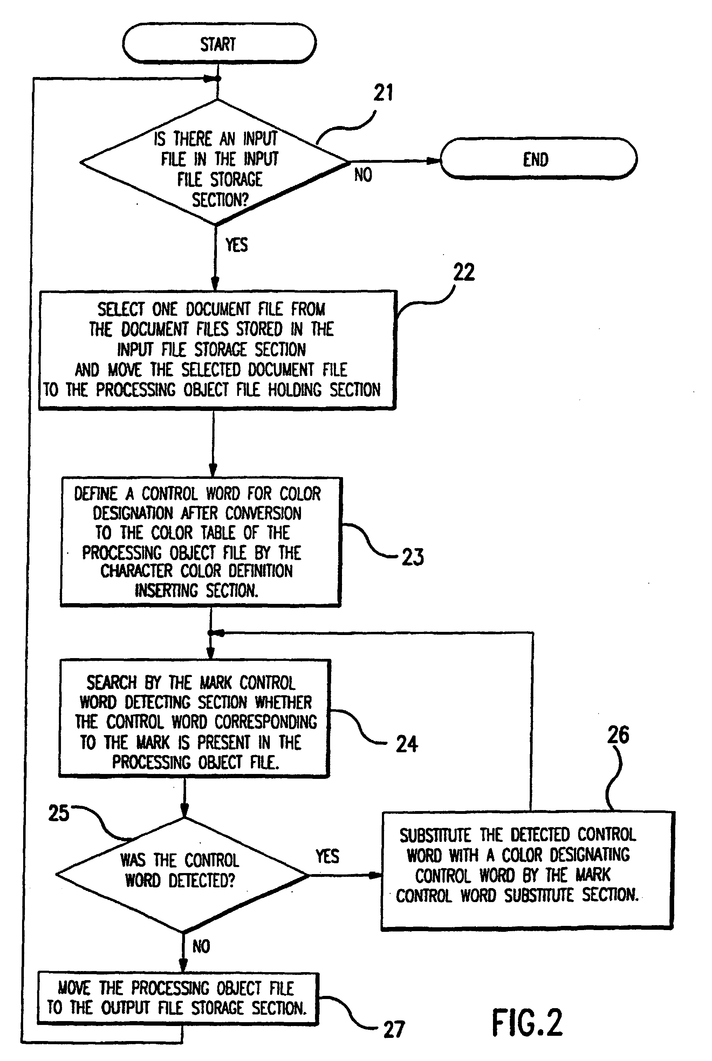

Fig. 2 is a flowchart showing a processing flow for conversion processing to color an electronic filing document file. In Fig. 2, at the start of processing in step 21, the processing control section 2 determines whether a document file is present in the input file storage section 1. If step 21 is negative, the processing is ended.

If step 21 is affirmative, the operation flow advances to step 22, where the processing control section 2 selects a document file stored in the input file storage section 1, and moves the selected document file to the processing object file holding section 6. The document file is thus moved to the processing object file holding section 6, and is the "processing object file".

Next, in step 23, the processing control section 2 controls the character color definition inserting section 8 to define a color designation, after color conversion, to the color table of processing object file in the processing object file holding section 6.

In step 24, the processing control section 2 controls the- mark control term detecting section 3 to determine if a control term corresponding to the mark is present in the document file of the processing object file. In step 25, a determination is made whether the control term was detected by the search.

If step 25 is affirmative, the operation flow advances to the step 26, where the mark control word substitute section 9 substitutes the detected control term with a color designating control term. The operation flow then returns to step 24, and continues processing for the next control term in the processing object file. In other words, the processing searches for the next control term, and where a control term is detected it substitutes the control term with a color designating control term, in steps 24 through 26. These steps are repeatedly performed as needed.

If the answer in step S25 is negative, all of the processings for the control terms have been completed. Thus, in step 27, the processing object file is moved to the output file storage section 5 and stored therein. The operation then returns to step 21, and repeats the processing as needed.

Thus, while the other system components are controlled by the processing control section 2, an electronic filing document file of black and white documents can be read. Further, a control term that indicates the addition of a highlight representation mark in a black and white document, such as underline, can be detected. The mark itself can be erased, marked character string can be colored, and a colored electronic filing document file can be output.

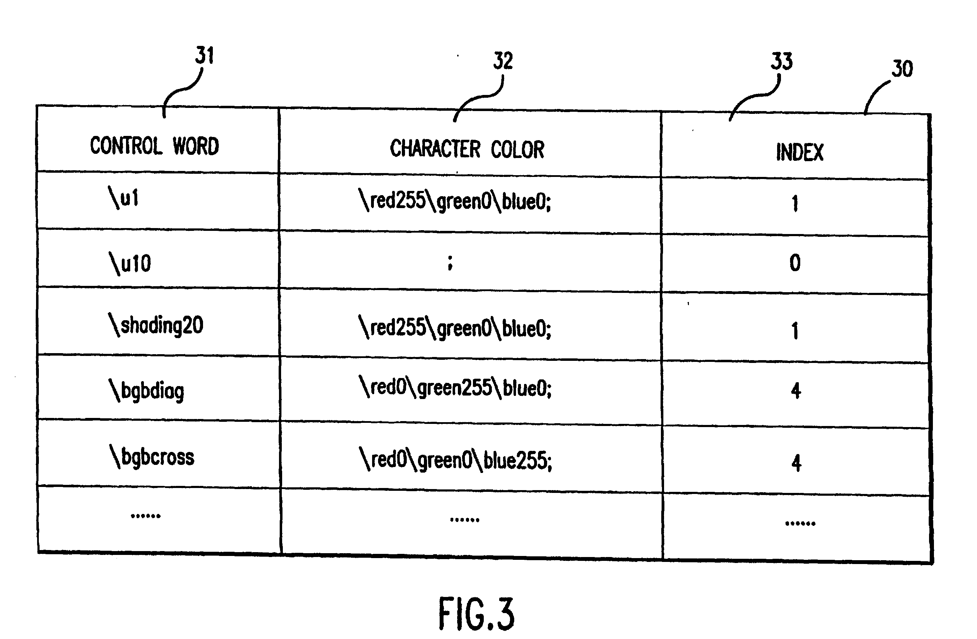

With this processing, correlation of mark control term with character color is defined by a data set in a mark control term/character color correspondence table 30 (Fig. 3). For example, an underlined character string is converted to a red character string of red color free underline, a character string with hatching with 20% density dots is converted to a character string of red color free hatching, and a character string with hatching with a backward diagonal background pattern is converted to a character string of blue color free hatching. Thus, a marked black and white data can be converted to color document data.

A description will now be provided for operation of each system component that is controlled by the processing control section 2. The input file storage section 1 is linked, for example by a network, to another document processing system through the external network bus 11. The input file storage section receives RTF files transmitted from another document processing system, and stores black and white RTF files that will be converted to color documents. The input file storage section 1 is used to store plural RTF files and perform coloring processing in a group.

The processing control section 2 controls the conversion processing for coloring and also controls individual system components. The processor control section 2 can read an electronic filing document file that contains layout information, can detect a highlight mark, such as underline, can colorize the marked character string and can output a colored file.

The processing object file holding section 6 holds a document file as a processing object file. The processing object file holding section 6 holds an RTF file, hereinafter known as "processing object file" for a document file to be converted to a color document. Data conversion to a color document is conducted for held processing object files. A file is held in the processing object file holding section 6. The mark control word detecting section 3, character color definition inserting section 8 and mark control word substitute section 9 access the held processing object file, can perform the data conversion to a color document, and can alter the file contents.

The output file storage section 5 stores an RTF file after the conversion. The output file storage section 5 can store document files for a plurality of RTF files. It can be linked to another document processing system by the external network bus 11, for example, by a wire. When another document processing system accesses the document processing system, the stored RTF files, after coloration conversion, are delivered to the accessed processing system from the output file storage section 5.

A mark control term or word/color correspondence table holding section 7 (hereinafter mark control word/color correspondence table holding section) holds tabulated data as a mark control word/color correspondence table 30, i.e., as in Fig. 3. The table 30 includes tabulated data correlating control terms that indicate the addition of marks in black and white documents, RGB values of character colors, and color table indexes for the processing object file.

Fig. 3 is a diagram explaining a data structure for a mark control word/color correspondence table 30. The mark control word/color correspondence table 30 comprises a control term or word field 31 (hereinafter control word field), a character color field 32 and an index field 33. Color designation entry data can be stored data correlating mark control terms and character colors with each other. In other words, one entry data in table 30 correlates a control term indicating the addition of one mark with a color designation.

The control word field 31 stores control terms indicating marks for conversion to colors. The character color field 32 describes RGB definitions for the color table corresponding to the marks indicated by the values of "control terms" at the same lines or entries in the control word field 31. The color designation value ";" in the character color field 32 indicates a default value.

The index field 33 stores a color table index for the processing object file, whose index is coincident with the value of "character color" at the same line or entry as the character color field 32. Thus, for a control word representing a mark, a corresponding color designation exists as a corresponding color designation value in the character color field 32. An indirect color designation can be made using a corresponding index value in the index field 33, and by utilizing the color table.

The mark control word/color correspondence table 30 is prepared based on conversion or color designation, where data conversion for the coloration of a black and white document was conducted. The control term values in the control term field 31 and values of color table RGB are defined as character colors in the character color field 32 and are fixed. The index values in the index field 33 change for each processing of an object file.

The correlation data using each entry data in the mark control word/color correspondence table 30 are accessed by the character color definition inserting section 8 to set a color to be used in the document, after the coloration conversion in the document file. The table 30 is also accessed by the mark control word detecting section 3 to determine a control term corresponding to the mark concerned from the document file. The correlation data can be accessed by the mark control word substitute section 9 to substitute a control term in the document file with a color designating control term.

Processing for setting a character color in the color table of the processing object file for use in the document after the coloration conversion is performed in the character color definition inserting section 8. Also, a processing, where an associated index of the color table for the processing object file, for setting in the index field 33 of the mark control word/color correspondence table 30 held by the mark control word/color correspondence table holding section 7.

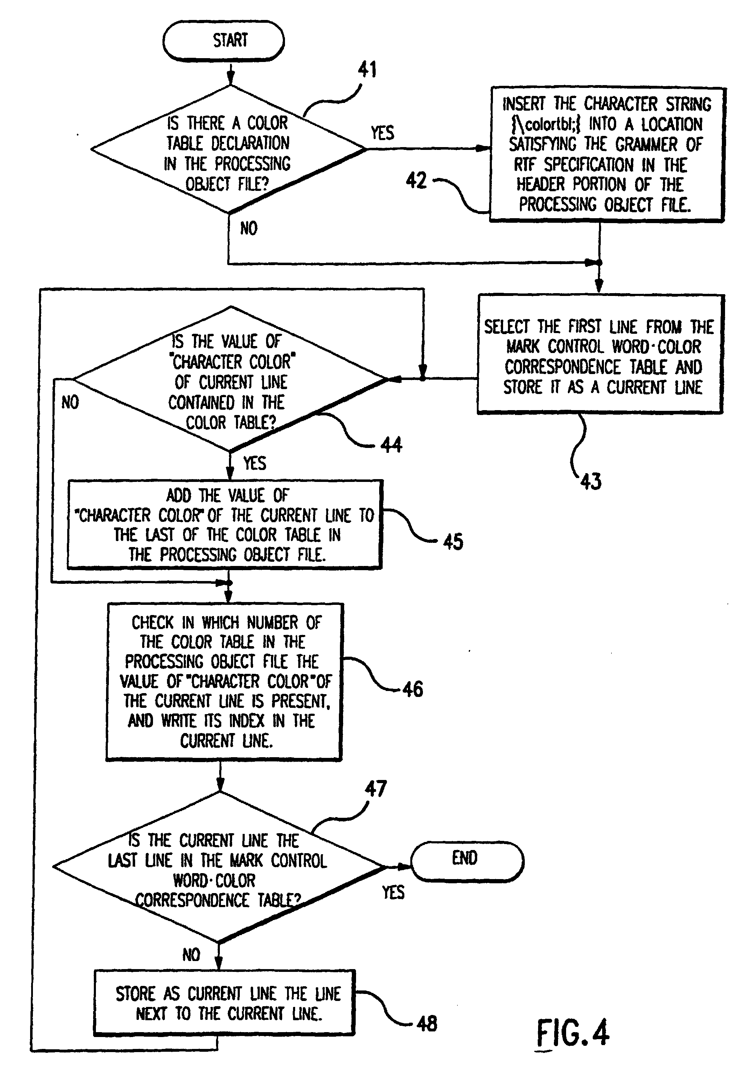

Fig. 4 is a flowchart showing processing in the character color definition inserting section 8. With reference to Fig. 4, a description is now provided for processing by the character color definition inserting section 8 to set the character color in the document after the coloration conversion in the color table of the processing object file.

Once the processing is started, step 41 determines whether a color table declaration is present in the processing object file. If a color table declaration is not present, the operation advances to step 42, where character string { \ colortbl; } is inserted into a header portion of the processing object file at a location to satisfy grammar in the RTF specification. If a color table declaration is present, the operation advances to step 43.

In step 43, a first line or entry is chosen from the mark control word/color correspondence table 30 held by the mark control word/color correspondence table holding section 7. This is stored as the current line. In step 44, a determination is made whether a value of "character color" in the character color field for the current line is in the color table for the processing object file.

If the value of that "character color" is not in the color table for the processing object file, the value of "character color" in the current line character color field 32 is added to a last part of the color table of the processing object file, in step 45. The operation advances to step 46. If in step 44 the value of "character color" in the character color field 32 of the current line is in the color table of the processing object file, the operation advances directly to step 46.

Step 46 determines the number of the color table for the processing object file and the value of "character color" in the character color field 32 occurs. The associated index is then written in the current line as a value in the index field 33. The operation then moves to the step 47, where a determination is made whether the current line is the last line or entry of the mark control word/color correspondence table 30. If step 47 is negative, the line next to the current line is stored as a new current line in step 48. The operation returns to step 44, where an operation from step 44 is repeated.

On the other hand, if the current line is determined to be the last line or entry of the mark control word/color correspondence table 30 in step 47, the operation is ended. This is because all character color definitions in the table 30 have been stored for the processing object file up to this point.

The mark control word detecting section 3 will now be described. In the mark control word detecting section 3, a control term, which is coincident with a value designated in the control word field 31 for the mark control word/color correspondence table 30, is searched and detected for the processing object file. The detected control term and its position in the processing object file are then stored. The number of control term(s) detected by a single search should not be larger than one, and detection of "0" indicates that a processing object file does not contain control term as designated in the control word field 31. Such a mark control term detecting function, as described hereinafter, detects a character from the processing object file during processing of the leading character detecting section 4. It is also utilized to replace a mark with color during processing of the mark control word substitute section 9.

A description of the leading character detecting section 4 will now be provided. The leading character detecting section 4 searches a processing object file to detect the first character after a certain control term from text contents of a document in the processing object file. The leading character detecting section 4 then stores the detected character and its position in the processing object file. Control terms stored in the mark control word detecting section 3 are used as the control term corresponding to a search start point and position. Processing in accordance with the invention then is started. The leading character detecting section 4 can substitute a mark with color during processing of the mark control word substitute section 9.

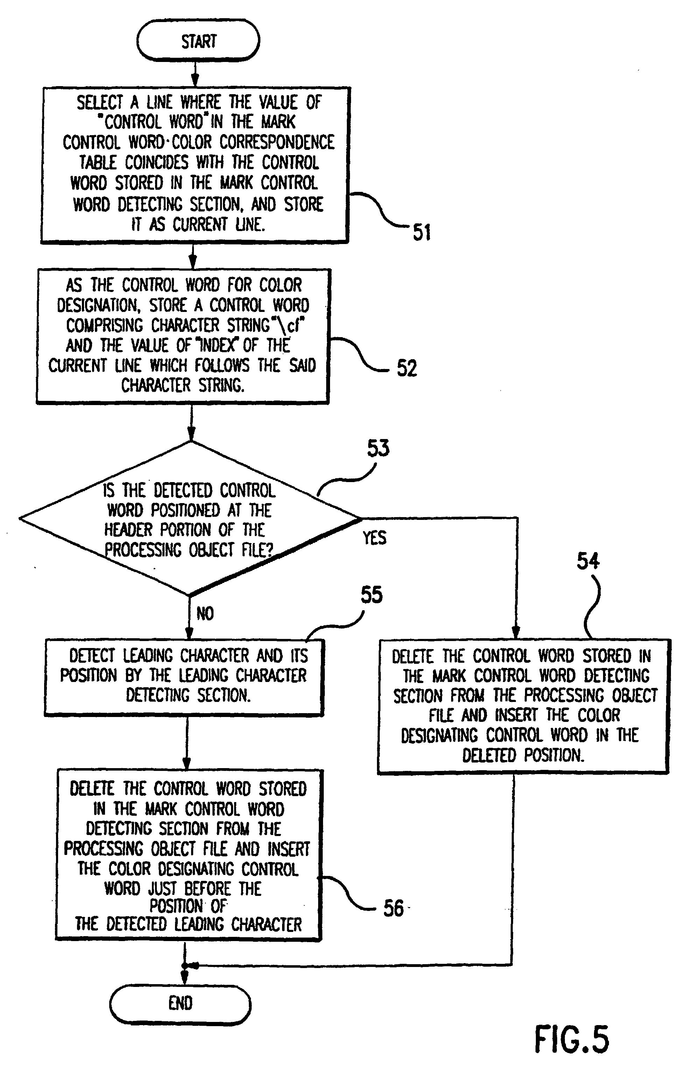

The mark control word substitute section 9 operation will now be described. The mark control word substitute section 9 can delete a control term indicating an addition of a mark from a processing object file. The mark control word substitute section can also insert a color designating control term into the processing object file. Fig. 5 is a flowchart for processing in the mark control word substitute section 9.

At the start of processing, in step 51, a search is made for a line of the control word field 31 in the mark control word/color correspondence table 30 that is held in the mark control word/color correspondence table holding section 7. A line, where the value of the control term coincides with the control term value stored in the mark control word detecting section 3, is then selected and stored as the current line. The operation advances to step 52, where a color designating control term is stored as a control term. For example, the control term can comprise character string "\cf" and an index value for the index field 33 of the current line following the character string.

In step 53, a determination is made whether the control term stored in the mark control word detecting section 9 is positioned in a header portion of the processing object file. If yes in step 53, the operation moves to step 54, where a control term, which stored in the mark control word detecting section 3, is deleted from the processing object file and a color designating control term prepared in step 52, is inserted into the deleted position. The operation is then ended.

If in step 53, a control term stored in the mark control word detecting section 3 is not in the header portion of the processing object file, the leading character detecting section 4 detects a character and its position. More specifically, the leading character detecting section 4 can search the processing object file, detect the first character after the control term from the text contents of document in the processing object file, and store both the detected character and its position in the processing object file.

In step 56, the detected character and its position are accessed. The control term stored in the mark control word detecting section 3 is deleted from the processing object file, and a color designating control term, which was prepared in step 52, can be inserted before the position of the character detected by the leading character detecting section 4. This terminates operation.

Values in the mark control word/character color correspondence table 30 are set, for example, in Fig. 3, as a description ' ... { \ stylesheet \ bgbdiag; } ...' and can be substituted for by a description '... { \ stylesheet \ cf2; } ... ' by the mark control word substitute section 9. If a description '... { \ ul underline \ ul0 is drawn at a portion} ... ' is in a document of the processing object file, this description is substituted for by the description '... { \ cf1 underline \ cf0 is drawn at a portion}...'.

When a correlation of mark control term and character color exist, as in Fig. 3, marked black and white data can be converted to color document data using an electronic filing document file converter as a document processor. For example, in Fig. 3, an underlined character string can be converted to a red character string free of an underline, and a hatched character string with 20% density dots can be converted to a red character string free of a hatching. Further, a hatched character string with a backward diagonal background pattern can be converted to a blue character string free of a hatching.

An electronic filing document converter as a document processor will now be described according to an embodiment of the invention. In the electronic filing document file converter, a mark or a control term representing a mark indicates a highlighted portion of a black and white document. The control term provides attributes for a character string or a paragraph. In the electronic filing document converter according to the second embodiment, a mark for color conversion is provided as graphic information.

In the electronic filing document converter according to this embodiment, a mark could be, for example, a closed curve drawn on a page of a document. This is used as geometric graphic or bit map image data. In the electronic filing document converter according to this embodiment, a page layout is calculated, and a comparison is made between a position of a character string and that of a mark so as to detect a marked character string.

With respect to this embodiment, reference will now be made to the representation of geometric graphic data and bit map image data, both of which conform to an RTF specification serving as a condition or premise in document processing. According to the RTF specification, geometric graphic data can be provided as drawn or drawing objects. More specifically, the description of a certain drawing object can be expressed as:
'{ \ *' \ do <dohead> <dpinfo> '}'.
where, both "<dohead>" and "<dpinfo>" are nonterminals. "<dohead>" contains a description relating setting of an anchor or the drawing object. "<Dpinfo>" contains a description relating to a shape of the drawing object. Further, control terms defined by the RTF specification are used for the description of a shape, such as line type or a solid print pattern.

The bit map image data, according to the RTF specification, can be provided as pictures and expressed by a description, for example beginning with control term "\pict". After an arrangement of control terms that represent information necessary to interpret bit data, such as a definition of bit map plane and designation of image size, bit data of hexadecimal or binary digit representation can be provided. For an electronic filing document with geometric graphic or bit map image data expressed by the RTF specification, color conversion processing is performed using terms that are provided as graphic information, by means of the electronic filing document converter according to this embodiment.

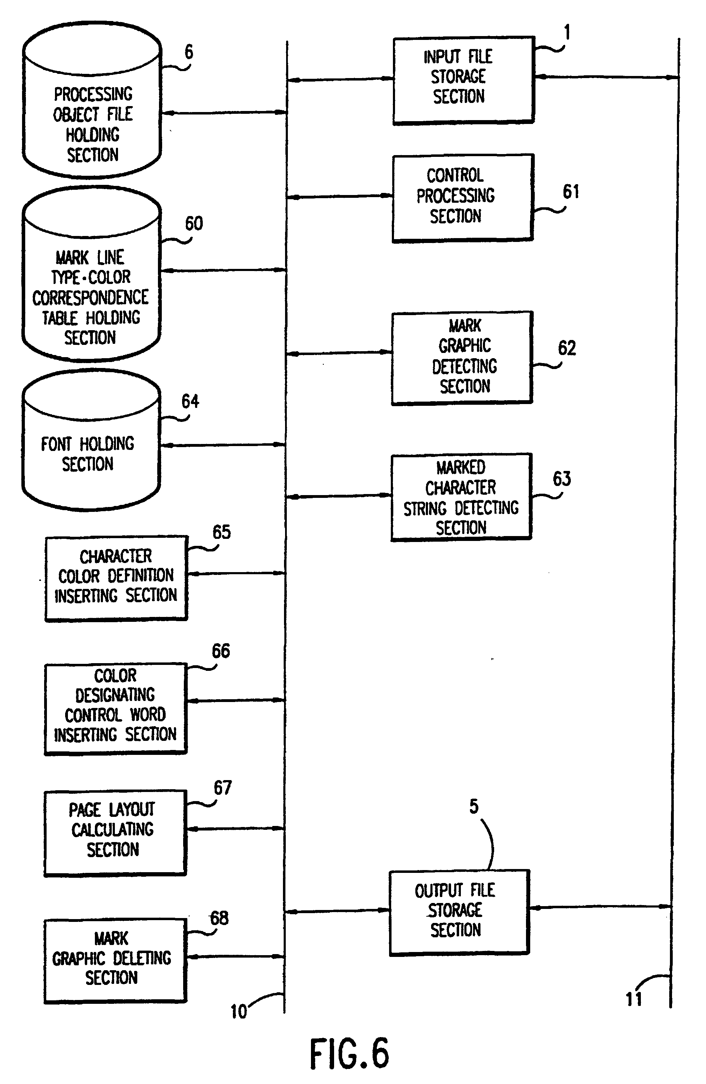

Fig. 6 is a block diagram illustrating system components comprising the electronic filing document converter used as a document processor according to this embodiment. The document processor comprises an input file storage section 1, an output file storage section 5, a processing object file holding section 6, an internal bus 10, an external network bus 11, a mark control word/color correspondence table holding section 60, a processing control section 61, a mark graphic 60, a processing control section 61, a mark graphic detecting section 62, a marked character detecting section 63, a font holding section 64, a character color definition inserting section 65, a color designating control word inserting section 66, a page layout calculating section 67, and a mark graphic deleting section 68.

In the document processor according to this embodiment, components that are similar to those in the previously described documents processor are indicated with the same reference numerals. In particular, the input file storage section 1, output file storage section 5, processing object file holding section 6, internal bus 10 and external network 11 are similar to the previously described document processor.

In Fig. 6, the input file storage section 1, output file storage section 5, processing object file holding section 6, mark line type/color correspondence table holding section 60, processing control section 61, mark graphic detecting section 62, marked character string detecting section 63, font holding section 64, character color definition inserting section 65, color designating control word inserting section 66, page layout calculating section 67 and mark graphic deleting section 68 are connected with one another through the internal bus 10 as in the previously described document processor. Thus, these constitute a document processing system of terminal equipment for a network system. At the input file storage section 1 and output file storage section 5, the document processing system is connected via the external network 11 to an external document processing system that can be connected to a network system.

In the document processor according to this embodiment, color conversion processing for an electronic filing document is performed using a graphic information mark. The processing control section 61, while controlling other system components, can also read a file for the electronic filing document containing the graphic information as a mark, can color characters of a character string specified by using a closed curve drawn on a page, identify geometric graphic data or bit map image data as a mark, can erase the mark itself, and can output the converted file as a colored electronic filing document. For example, a color processing for an electronic filing document can be performed so a character string enclosed by a bit map image can be converted to a red character string, a character string enclosed by a broken line can be converted to a green character string, and a character string enclosed by a dotted line can be converted to a blue character string.

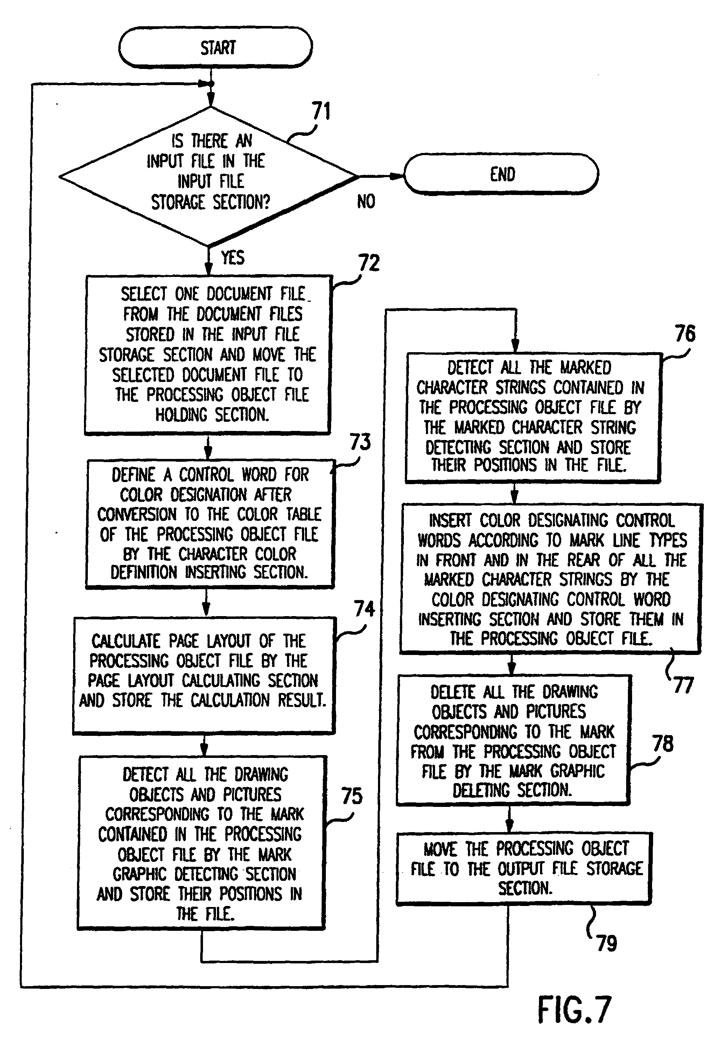

Fig. 7 is a flowchart for the processing flow of the conversion processing to color of an electronic filing document by the processing control section according to this embodiment. The processing flow will now be described. Upon start of processing, in step 71 the processing control section 61 determines whether document files are present in the input file storage section 1. If the answer in step 71 is no, processing is ended.

If files are present in the input file storage section 61, i.e., yes in step 71, the operation advances to step 72. At step 72, the processing control section 61 selects one document file from the input file storage section 1. This selected file can be moved to the processing object file holding section 6, as a processing object file.

In step 73, the character color definition inserting section 65 defines a color designation after color conversion to the color table for the document for the processing object file. In step 74, the page layout calculating section 67 calculates a page layout for the processing object file, followed by storing or holding of the calculation result. In step 75, the mark graphic detecting section 62 can detect all drawing objects and pictures that correspond to marks contained in the processing object file. Their positions in the file are then stored.

In step 76, the marked character string detecting section 63 detects all marked character strings contained in the processing object file, and their positions in the file are stored. In step 77, the color designating control word inserting section 66 inserts color designating control terms according to mark line types before and/or after all the marked character strings, and stores them in the processing object file.

In step 78, the mark graphic deleting section 68 deletes all drawing objects and pictures corresponding to marks from the processing object file. Thus, the processing for the electronic filing document is complete. In step 79, to continue, the processing object file is moved to the output file storage section 5, and a processed document file is stored in the same storage section. Then, the operation returns to step 71 and repeated.

Thus, the processing control section 2, while controlling the other system components, can read an electronic filing document file for black and white documents that contain layout information, can detect a control word indicating an addition of a highlight representation mark in each black and white document, such as underline, can erase the mark itself, can color the marked character string, and can output the colored electronic filing document file.

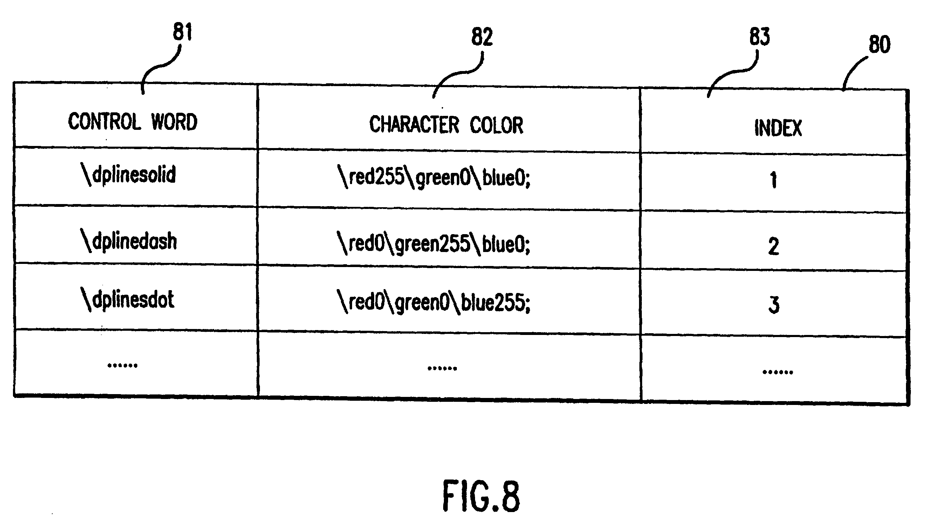

Where a correlation of graphic information line types are used as marks with character colors defined by a data set in a mark line type/color correspondence table 80 (Fig. 8) in the mark line type/color correspondence table holding section 60, color conversion processing can be conducted. The color conversion processing can be, for example, performed by series of operations in the processing control section 61. These operations include converting a character string enclosed by a bit map image to a red character string, converting a character string enclosed by a graphic form of broken line to a green character string, and converting a character string enclosed by a graphic form of dotted line to a blue character string. Thus, black and white document data with graphic information as marks can be converted to color document data.

Fig. 8 is a diagram explaining the data structure of the mark line type/color correspondence table 80. The mark line type/color correspondence table 80 comprises a control term or word field 81 (hereinafter control word field 81), a character color field 82 and an index field 83. Entry data for color designation can be stored data correlating control terms for graphic information as marks with character colors. In other words, entry data in the mark line type/color correspondence table 80 correlates control terms for graphic information as marks with color designations for color characters.

Control terms representing marks for conversion to colors are stored in the control word field 81. Stored control terms designate the line type or style of objects. In the character color field 82, similar to the mark control word/color correspondence table 30 of the previously described processor, character colors after color conversion are described with RGB definitions for a color table corresponding to the marks indicated by the values of control terms at the same lines or entries in the control word field 81. Color table indexes are coincident with values of character colors at the respective lines or entries in the character color field 82. Thus, for a control term representing graphic information as a mark, (e.g. "\ dplinesolid, \ dplinedash, \ dplinedot"), a direct color designation can be made using a corresponding value of color designation in the character color field 82. An indirect color designation can be made using the corresponding index value in the index field 83. Both the direct and indirect color designation utilize the color table.

The mark line type/color correspondence table 80 is prepared based on contents of conversion, i.e., color designation for coloring of a document character string using graphic information as marks. Although control term values in the control word field 81 and values of color table RGB definitions are fixed, index values in the index field 83 can be changed for each processing object file.

Correlation data using each entry data in the mark line type/color correspondence table 80 is accessed by the character color definition inserting section 65 and set in the document file the color. It is used in the document after the color conversion. They are also accessed by the mark graphic detecting section 62 for determining the control term corresponding to a pertinent mark from the document file. The correlation data are further accessed by the color designating control word inserting section 66 to insert a color designating control term into the character string specified by the mark in the document file.

In the character color definition inserting section 65, processing to set a color table for the processing object file character color for use in the document after the coloration conversion is conducted. Also, an index in the color table is set in the index field 83 of the mark line type/color correspondence table 80 held by the mark line type/color correspondence table holding section 60. Since processing of the character color definition inserting section 65 is similar to a processing illustrated in Fig. 4, provided that RGB values defined here there are those in the table 80 held by the table holding section 60, an explanation is omitted.

The font holding section 64 holds a character font that can be designated by a font table group at the header portion in the processing object file. The page layout calculating section 67 utilizes character font information held in the font holding section 64 to make a rough page layout calculation. Similarly, the marked character string detecting section 63 accesses the character font information held in the font holding section 64 to detect a character string within a graphic information mark.

The page layout calculating section 67 can calculate areas occupied by a paragraph and drawing object (s) and picture(s) in the processing object file on a page, and can store the calculation results as data in a coordinate system for each page. Thus, a coordinate system with a left upper corner point of each page as the origin, an upper end of the page as an x axis and the left end of the page as a y axis is created. The coordinate system uses a unit "twip", which indicates a length on the page layout. In terms of point, which is a unit used in printing, one twip corresponds to 0.05 point.

An area paragraph is given as a minimum rectangular area that is capable of including all text contents when the text contents are laid out on a page. Calculation for this area uses information relating to the size of the character font held in the font holding section 64. A result of this calculation is stored as rectangular data on the coordinates. The position in the processing object file where a description of the paragraph starts is stored correlating to rectangular data.

A drawing object area is given as a minimum rectangular area capable of including relevant graphic form(s). A result of this calculation is stored as rectangular data on the coordinates. The position in the processing object file, where a description of the drawing object is started, i.e., the position of the control word "\do", is stored correlating to the rectangular data.

A picture area is given as a minimum rectangular area that is capable of including relevant bit map image(s). The position in the processing object file, where a description of the picture is started, i.e., the position of the control word "\pict", is stored correlating to the rectangular data.

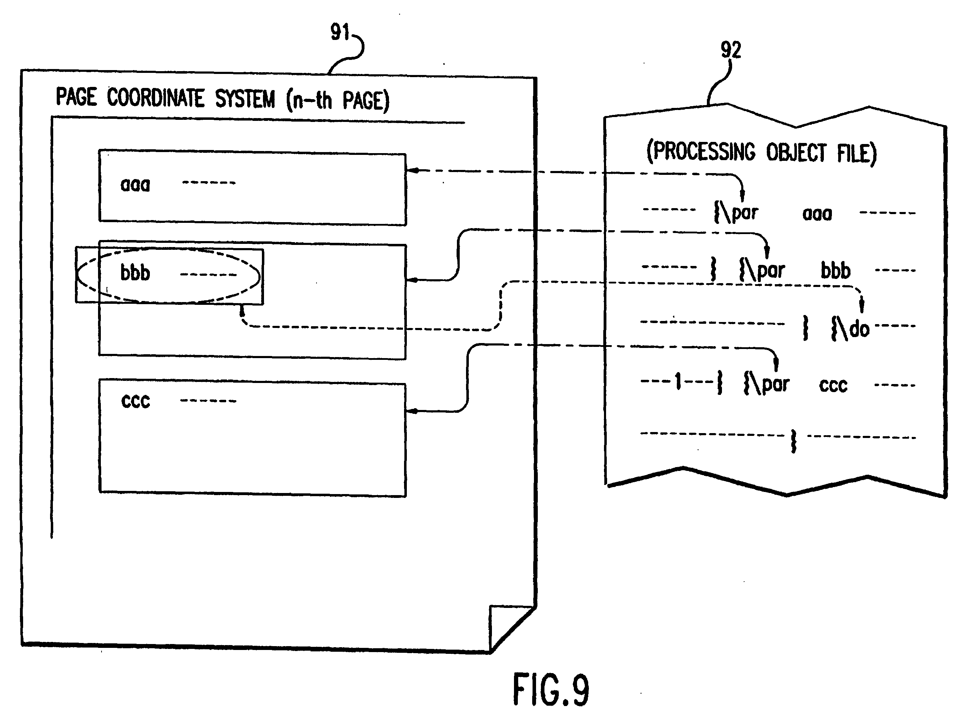

The page layout calculating section 67 holds results of the layout calculations. Positional relations between such document data in the processing object file and data in the page coordinate system are shown in Fig. 9. Fig. 9 explains relationships between document data in the processing object file and areas that the document data occupy on a page. In Fig. 9, a description of a character string corresponding to the area of paragraph that is started by the control term "\par", so a paragraph area calculated by the page layout calculation and a start point of description starting with control term "\par", are stored with each other. Also, other rectangular areas, which are calculated by the layout calculation and control terms as description start points corresponding to those areas, are stored with each other.

A description is now provided for mark graphic detecting section 62. The mark graphic detecting section 62 searches for a processing object file and detects drawing object(s) and picture(s) corresponding to marks specifying a character string to be colored. The areas designated by marks can overlap an area of a paragraph on a page. Thus, the mark graphic detecting section 62 searches for such drawing object(s) or picture(s) using the page layout calculating section 67.

More specifically, drawing object(s) and picture(s) corresponding to marks are detected by performing a series of the following Processing Steps (1) to (3) for all descriptions of drawing object(s) and picture(s) in each processing object file.
Processing Step (1): Search for a description starting with the control term "\do" or "\pict" in a processing object file.
Processing Step (2): Determine area data correlated with the stored data for the page layout calculating section, from the description start position in the processing object file found in the Processing Step (1).
Processing Step (3): Determine if an area data found in the Processing Step (2) overlaps a laid-out area of paragraph on page coordinates. If yes, determine whether the description corresponding to mark from in the Processing Step (1) is a drawing object or picture.

Once the drawing object or picture is detected, a description start position in the processing object file for the detected drawing object(s) or picture(s) with the description start position for a paragraph that overlaps, it are stored with each other. The marked character string detecting section 63 detects a character string in paragraph marked with the drawing object(s) or picture(s). More specifically, for each description start position stored in the mark graphic detecting section, the marked character string detecting section 63 performs Processing Steps (10) to (13). These steps detect a character string in paragraph marked with the drawing object or picture.
Processing Step (10): Search for area data for the paragraph using the page layout calculating section 67, from a description start position for the paragraph stored in the mark graphic detecting section 62.
Processing Step (11): Calculate a position for each character in the paragraph on the page coordinate system utilizing both the area data found from Processing Step 10 and character font information in the font holding section, and store the result.
Processing Step (12): From the description start position for a drawing object(s) or picture(s) stored in the mark graphic detecting section 62 and correlated with the description start position in the Processing Step (10), determine area data for drawing object(s) or picture(s) using the page layout calculating section 67.
Processing Step (13): Compare the calculation result in the Processing Step (11) with area data found out in the Processing Step (12), locate the first and last characters included in the area data, and store their positions in the processing object file correlated to the description start position in the Processing Step (12).

Thus, the marked character string detecting section 63 detects the character string in the paragraph marked with the drawing object(s) or picture(s). For the detected character string, the color designating control word inserting section 66 inserts color designating control terms.

In the color designating control word inserting section 66, control terms for changing the color of the marked character string are inserted into a processing object file corresponding to a position in the character string. More specifically, control terms for color designation are inserted just before and just after the first and last characters, which are marked and stored in the marked character string detecting section 63.

As in the previously described document processor, a value for the control term inserted just before the first character's position is determined using the mark line type/color correspondence table 80 in the mark line type/color correspondence table holding section 60. The particular line or entry data for the table 80 is determined by the description of the drawing object(s) or picture(s), which is associated with the first character position.

With a drawing object, a line at which the line type designating control term contained in the description concerned is coincident with the value the item control term in the correspondence table is used. With a picture, there is no control term to control the line type, so a control term "\dplinesolid" is defined. Processing is continued in the same way as a drawing object. The value of the control term after the position of the last character is "\cf0", which indicates return of the color designation to a default.

After the color designating control terms have been inserted by the color designating control word inserting section 66, the mark graphic deleting section 68 deletes the graphic information that was utilized as a mark. The mark graphic deleting section 68 accesses the mark line type/color correspondence table 80 held in the mark line type/color correspondence table holding section 60, and deletes arbitrary descriptions of drawing object(s) or picture(s) from the processing object file.

Thus, according to the electronic filing document converter of this embodiment, for example in Fig. 8, a character color value 'Red: "\red255 \ green0 \ blue0"' is set for the control word"\dplinesolid"; the character value 'Green: "\red0 \ green255 \ blue0"' is set for control term "\dplinedash"; and the character color value 'Blue: "\red0 \ green0 \ blue255"' is set for control term "\dplinedot". Color conversion then is conducted. This results in a character string enclosed with a bit map image being colored red, a character string enclosed with a graphic form of broken line being colored green, and a character string enclosed with a graphic form of dotted line being colored blue.

Thus, in the electronic filing document converter according to this embodiment, graphic information as drawing object(s) or picture(s) can be utilized for color conversion of characters in a character string. Conversely, in the electronic filing document file converter as previously described invention, a mark control term as underline or hatching is utilized, as a mark, for color conversion of characters in a character string.

It is possible to combine the method of this embodiment with the method as previously described to conduct color conversion of various electronic filing documents. In particular, this embodiment can be used even if an entire system and its system components are modified. For example, by combining an electronic filing document file converter, as previously described, with the electronic filing document converter, according to this embodiment, it is possible to process both marks using text attributes and marks based on picture(s) or drawing(s), to color characters of a character string.

The input file storage section 1 may comprise a format conversion function to convert an arbitrary file format to RTF format. It is possible to color convert a document file of an arbitrary file format. Likewise, the output file storage section 5 may comprise a format conversion function to convert from an RTF format to an arbitrary file format with a color describing capability. Thus, a document file, which has undergone the color conversion processing, can be output in an arbitrary file format. Further, the format conversion function may comprise a function that permits the user to select a desired file format and to receive an output in a file format that a user desires.

The tables in the mark control word/color correspondence table holding section 7 and the mark line type/color correspondence table holding section 64 may be modified by a user. Thus, it is possible to set a mark-color correlation to one desired by a user. Further, an inquiry can be made by a user whether any alteration is temporary or permanent. Thereafter, an alteration may be set based on instructions given by a user, so correlation alteration can meet a user's request.

With altering the mark-color correlation according to a user's desire, a GUI (Graphical User Interface) technique may be used to indicate examples of marks and colors, and make selection from among them. This may be in addition to a structure that permits direct input of the values of various data in the mark control word/color correspondence table 30 and mark line type/color correspondence table 80. It is thus possible to reduce a burden on the user's input operation. The tables can be optionally replaced or updated.

Further, an item field for a catalog of control terms relating to the character shape, for example, relating to character shape for character format characteristics, such as "\i", "\outl", may be added to a correspondence table held by the mark control word/color correspondence table holding section 7 or the mark line type/color correspondence holding section 64. Associated values in the item field are written after color designating control terms when writing the control terms into the processing object file. Therefore, it is possible to alter color and character shape of a marked character string. It is also possible to alter the shape of the character background area, i.e., modifications can be made to permit hatching, netting and the like.

By altering a character shape or a shape of the character background area, contents of the character color designating control terms may remain substantially unchanged. Specifically, a color conversion involving conversion of mark control terms for the characters of a character string, a modification where the conversion of character shape control words is done instead of a conversion of color designating control words. This is advantageous because a user can obtain a desired highly conspicuous document with less expense, when the discriminating effect is ensured without a change of color.

Although this embodiment uses lines and hatchings for specifying characters of a character string in color conversion, other marks may be used. These marks must permit a visual specifying of covered area(s), such as parentheses, brackets, and solid print.

Although visual characteristics of a character string can be altered in this embodiment according to the shape of a mark, a modification is also possible to alter contents of visual characteristic based on color of mark. The mark control word detecting section or the mark graphic detecting section can detect a specific color as a mark. The alteration contents are determined from the detected mark color based on a mark control word/color correspondence table or a mark line type/color correspondence table. Also, information that relates the mark's shape and color with the character string altering method can be held by the respective table. Thus, a configuration of the contents for the color designating control terms for characters in the specified character string can be altered.

Further, although a visual characteristic of a character string can be altered according to the shape of mark in this embodiment, it is possible to alter visual characteristic using characters or graphics located near the mark. For example, in an electronic filing document file converter as previously described, it is possible to search for a control term for superscript or subscript present just before or just after the control term corresponding to a mark. If it found, a visual characteristic of the marked character string can be altered.

For example, according to an RTF specification, the character string '... The sales of company A are by far the most important....' can be described as '... {The sales of company A are \ ul by far the most \ ul0 \ sub important \ nosupersub.} ... '. Here, the control term "\sub" indicates the start of subscript, while the control term "\nosupersub" indicates the end of superscript or subscript. Therefore, a search is conducted for a control term and control term substitute for altering its visual characteristic.

More specifically, using a search control term-substitute control term correspondence table, which holds each information piece correlating the control term corresponding to the mark to be detected and contents of superscript or subscript with the character string altering method, the control word conversion processing for the character string can be performed.

When processing according to this embodiment, information pieces, which correlate a shape of mark to be detected and characters or graphics near the mark with an alteration method for the character string, are held according to a file format of processing data in the mark line type/color correspondence table. The data conversion processing is then conducted based on those information pieces.

Thus, after detection of a mark, the mark graphic detecting section 62 searches for picture elements near the mark to recognize characters or a graphic form. Based on both a result of this recognition and correlation information in the mark line type/color correspondence table, the color designating control word inserting section 66 inserts control terms into the processing object file. The mark graphic deleting section 68 changes a color of the mark graphic and character(s) or graphic(s) into white. A change of visual characteristics in the character string can then be obtained.

In the electronic filing document converter according to this embodiment, RTF is used as a file format for processing data. However, any other suitable file format may be used, as long as it has a describing capability equal to or higher than that of RTF, with respect to color and mark. Further, although both converters use a table form for a data structure in the mark line type/color correspondence table, any other data structure may be used, as long as it permits a color description with control terms as keys. Thus, modifications may be made for various formats and data structures.

The scope of the invention is limited only by the appended claims.

## Claims

1. A document processor comprising:
image information input means (1, 61) for inputting an electronic document written in a page description language and describing a black-and-white image having characters described by character code information and a highlight for the characters described by graphic code information;
page layout calculating means (67) for calculating a page layout of the electronic document input by said image information input means (1, 61);
graphic form detecting means (62) for detecting the position of a highlighting graphic form described by said graphic code information in the page;
character string detecting means (4, 63) for detecting a string of the character code information contained in said highlighting graphic form on the basis of both the result of the calculation made by said page layout calculating means (67) and said position of the highlighting graphic form detected by said graphic form detecting means (62);
color determining means (65) for selecting a color different from black as a color to which the string of character code information detected by said character string detecting means (4, 63) is to be colored; and
converting means (60) for converting the color of the string of character code information detected by said character string detecting means (4, 63) into the color determined by said color determining means (65) by inserting color code words into the electronic document.

2. A document processor according to claim 1, wherein said converting means (60) does not receive the character code information input by said image information input means (1, 61) that is not detected by said character string detecting means (4, 63).

3. A document processor according to claim 1, further including a graphic form deleting means (68) for deleting the graphic code information describing the highlighting graphic form detected by said graphic form detecting means (62).

4. A document processor according to claim 1, wherein said character code information and the highlight for the characters described by the graphic code information are defined by at least one control word,
wherein the converting means (8) also removes the at least one control word from said changed version of the electronic document.

5. A document processor according to claim 4, wherein said converting means (6) determines the color based upon said detected at least one control word.

6. A document processor according to claim 4, wherein said converting means (6) determines the color based upon a shape of a mark described by the at least one control word.

## Patentansprüche

1. Dokumentenverarbeitungsvorrichtung, enthaltend:
eine Bildinformationseingabeeinrichtung (1, 61) zum Eingeben eines elektronischen Dokuments, das in einer Seitenbeschreibungssprache geschrieben ist und ein Schwarz-weiß-bild mit Zeichen beschreibt, die durch Zeichencodeinformationen beschrieben sind, sowie eine Hervorhebung für die Zeichen, die durch Grafikcodeinformationen beschrieben ist;
eine Seitenentwurfsberechnungseinrichtung (67) zum Berechnen eines Seitenentwurfes des durch die Bildinformationseingabeeinrichtung (1, 61) eingegebenen elektronischen Dokuments;
eine Grafikformerfassungseinrichtung (62) zum Erfassen der Position einer Hervorhebungsgrafikform, die von den Grafikcodeinformationen in der Seite beschrieben wird;
eine Zeichenkettenerfassungseinrichtung (4, 63) zum Erfassen einer Kette der in der Hervorhebungsgrafikform enthaltenen Zeichencodeinformationen auf der Basis sowohl des Resultats der Berechnung, die von der Seitenentwurfsberechnungseinrichtung (67) durchgeführt wurde, als auch der Position der Hervorhebungsgrafikform, die von der Grafikformerfassungseinrichtung (62 ) erfasst wurde;
eine Farbbestimmungseinrichtung (65) zum Auswählen einer von Schwarz verschiedenen Farbe als eine Farbe, mit der die von der Zeichenkettenerfassungseinrichtung (4, 63) erfasste Kette der Zeichencodeinformationen zu färben ist; und
eine Umwandlungseinrichtung (60) zum Umwandeln der Farbe der von der Zeichenkettenerfassungseinrichtung (4, 63) erfassten Kette von Zeichencodeinformationen in die von der Farbbestimmungseinrichtung (65) bestimmte Farbe durch Einfügen von Farbeodewörtern in das elektronische Dokument.

2. Dokumentenverarbeitungsvorrichtung nach Anspruch 1, bei welcher die Umwandlungseinrichtung (60) die von der Bildinformationseingabeeinrichtung (1, 61) eingegebenen Zeichencodeinformationen nicht erhält, die nicht von der Zeichenkettenerfassungseinrichtung (4, 63) erfasst werden.

3. Dokumentenverarbeitungsvorrichtung nach Anspruch 1, ferner enthaltend eine Grafikformlöscheinrichtung (68) zum Löschen der Grafikcodeinformation, die die Hervorhebungsgrafikform beschreibt, die von der Grafikformerfassungseinrichtung (63) erfasst wurde.

4. Dokumentenverarbeitungsvorrichtung nach Anspruch 1, bei welcher die Zeichencodeinformationen und die Hervorhebung für die von den Grafikcodeinformationen beschriebenen Zeichen durch mindestens ein Steuerwort definiert sind,
wobei die Umwandlungseinrichtung (8) auch das mindestens eine Steuerwort aus der veränderten Version des elektronischen Dokuments entfernt.

5. Dokumentenverarbeitungsvorrichtung nach Anspruch 4, bei welcher die Umwandlungseinrichtung (6) die Farbe basierend auf dem erfassten mindestens einen Steuerwort bestimmt.

6. Dokumentenverarbeitungsvorrichtung nach Anspruch 4, bei welcher die Umwandlungseinrichtung (6) die Farbe basierend auf einer Form einer durch das mindestens eine Steuerwort beschriebenen Marke bestimmt.

## Revendications

1. Processeur de documents comprenant :
des moyens d'entrée d'information d'image (1, 61) pour entrer un document électronique écrit dans un langage de description de page et décrivant une image en noir et blanc comportant des caractères décrits par une information de code de caractère et une mise en évidence pour les caractères décrits par une information de code graphique ;
des moyens de calcul de configuration de page (67) pour calculer une configuration de page du document électronique entré par lesdits moyens d'entrée d'information d'image (1, 61) ;
des moyens de détection de forme graphique (62) pour détecter la position d'une forme graphique de mise en valeur décrite par ladite information de code graphique dans la page ;
des moyens de détection de chaîne de caractères (4, 63) pour détecter une chaîne de l'information de code de caractère contenue dans ladite forme graphique de mise en valeur, en fonction, tout à la fois, du résultat du calcul effectué par lesdits moyens de calcul de configuration de page (67), et de ladite position de la forme graphique de mise en valeur détectée par lesdits moyens de détection de forme graphique (62) ;
des moyens de détermination de couleur (65) pour sélectionner une couleur différente du noir comme couleur dans laquelle la chaîne d'information de code de caractère détectée par lesdits moyens de détection de chaîne de caractères (4, 63) doit être colorée ; et
des moyens de conversion (60) pour convertir la couleur de la chaîne d'information de code de caractère détecté par lesdits moyens de détection de chaîne de caractères (4, 63) en la couleur déterminée par lesdits moyens de détermination de couleur (65) au moyen d'une insertion de mots de code de couleur dans le document électronique.

2. Processeur de documents selon la revendication 1, dans lequel lesdits moyens de conversion (60) ne reçoivent pas l'information de code de caractère entrée par lesdits moyens d'entrée d'information d'image (1, 61) qui n'est pas détectée par lesdits moyens de détection de chaîne de caractères (4, 63).

3. Processeur de documents selon la revendication 1, comprenant de plus des moyens d'effacement de forme graphique (68) pour effacer l'information de code graphique décrivant la forme graphique de mise en valeur détectée par lesdits moyens de détection de forme graphique (62).

4. Processeur de documents selon la revendication 1, dans lequel ladite information de code de caractère et la mise en valeur pour les caractères décrits par l'information de code graphique sont définies par au moins un mot de commande,
dans lequel les moyens de conversion (8) éliminent également le mot de commande au nombre d'au moins un venant de ladite version changée du document électronique.

5. Processeur de documents selon la revendication 4, dans lequel lesdits moyens de conversion (6) déterminent la couleur en fonction dudit mot de commande au nombre d'au moins un détecté.

6. Processeur de documents selon la revendication 4, dans lequel lesdits moyens de conversion (6) déterminent la couleur en fonction d'une forme d'une marque décrite par le mot de commande au nombre d'au moins un.
